# EUROPEAN PATENT SPECIFICATION

(11) **EP 2 058 958 B1**
(45) Date of publication and mention of the grant of the patent: **28.10.2015**
(21) Application number: 06811778.7
(22) Date of filing: 13.10.2006
(51) Int. Cl.: H04W 72/04, G01S 5/00, H04B 7/155, H04W 84/04, H04W 88/02, H04W 88/08

(54) **WIRELESS BASE STATION, RELAY STATION AND FREQUENCY BAND ALLOCATION METHOD**
DRAHTLOSE BASISSTATION, RELAISSTATION UND VERFAHREN ZUR FREQUENZBAND-ZUWEISUNG
STATION DE BASE SANS FIL, STATION RELAIS ET PROCÉDÉ D'ALLOCATION DE BANDE DE FRÉQUENCE

(43) Date of publication of application: 13.05.2009
(60) Divisional application: 12191838.7
(73) Proprietor: FUJITSU LIMITED, Kawasaki-shi, Kanagawa 211-8588 (JP)
(72) Inventor: OKUDA, Masato, Kawasaki-shi, Kanagawa 211-8588 (JP)
(74) Representative: Stebbing, Timothy Charles
(86) International application number: PCT/JP2006/320505
(87) International publication number: WO 2008/044317

(56) References cited:
- WO-A1-2005/096552
- WO-A2-2006/023771
- JP-A- 2005 341 604
- JP-A- 2006 157 890
- JP-A- 2006 196 985
- US-A1- 2005 232 183

## Description

### FIELD

The present invention relates to a radio base station, relay station, and band allocation method using radio communication, and more particularly to a radio base station and the like for appropriately allocating a band between a radio terminal and a radio base station via a relay station.

### BACKGROUND

In IEEE 802.16WG, which is known as an example of a radio communication system standard, two types of radio communication systems are specified: IEEE 802.16d concerns fixed communication (e.g. see the following Non-patent Document 1), and IEEE 802.16e concerns mobile communication (e.g. see the following Non-patent Document 2).

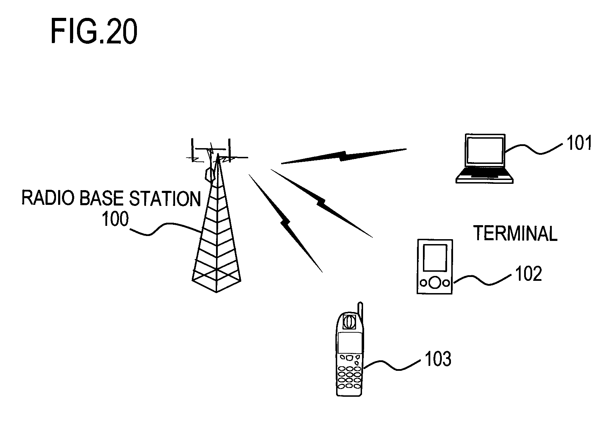

FIG. 20 depicts an image of the services provided by IEEE 802.16d and IEEE 802.16e. These services are based on a P-MP (Point-to-Multipoint) connection, where a plurality of terminals 101 to 103 are connected to one radio base station 100.

In this way, IEEE 802.16d or the like is based on a P-MP connection, so the service area is limited to a cover area (cell) covered by the radio base station 100, and the communication rate drops at the cell edge.

To solve this problem, in IEEE 802.16WG, a relay station to relay communication between a radio base station and radio terminals is under consideration (IEEE 802.16j).

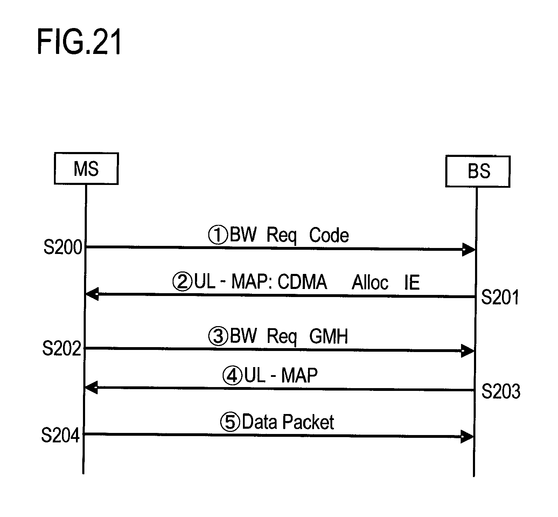

On the other hand, in IEEE 802.16d and IEEE 802.16e, radio communication is performed between a radio base station and a radio terminal after a bandwidth, sufficient for radio communication (values specified by sub-channel and symbol), is allocated. FIG. 21 is a diagram depicting an example of the band allocation sequence performed between a radio terminal MS and a radio base station BS.

First, the radio terminal MS sends a CDMA code included in a code group for a Bandwith-Request (hereafter called "BW Req Code") which indicates a band request out of a CDMA code (signal sequence) group (S200).

Other than use for the Bandwith-Request, CDMA codes are used for the adjustment of transmission parameters, such as power, frequency and timing to communicate with the radio base station BS, for Initial-Ranging for MS' network entry, for Periodic-Ranging for correcting transmission parameters periodically, and for Handover-Ranging which is used for switching the radio base station BS.

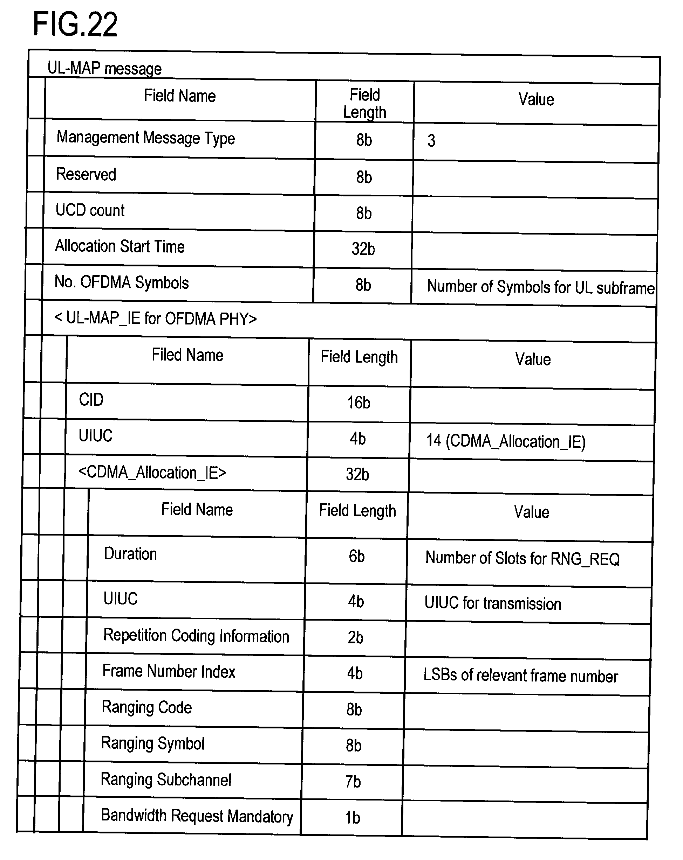

Then the radio base station BS sends a UL-MAP message (S201). FIG. 22 depicts an example of the format of a UL-MAP message. In this UL-MAP message, a CDMA Allocation IE is added as an information element. The radio base station BS, which received the BW Req code sucessfully, inserts information to allocate a band sufficient for sending a band request message from the radio terminal MS (Duration) into this CDMA Allocation IE field, in addition to the information on receive Code (e.g. Value of Code, timing when Code is transmitted, and information on the sub-channel).

As FIG. 22 depicts, "Frame Number Index" in the CDMA Allocation IE indicates a frame number when the CDMA code is sent, "Ranging Code" indicates the index of the CDMA code, and "Ranging Symbol" and "Ranging Sub-channel" indicate a symbol and sub-channel when the CDMA Code was sent respectively. By this information, the transmitter of CDMA code can identify whether the CDMA Allocation IE is addressed to itself, and can transmit the band request message using the band specified by "Duration".

In FIG. 22, two UIUC fields exist in the UL-MAP: where the first UIUC indicates the CDMA Allocation IE, and the second UIUC is an identifier which indicates a modulation method and encoding method used by the radio terminal MS in the allocated band. Normally the radio base station BS has not specified the radio terminal MS in this stage, so the modulation method (e.g. QPSK) and encoding method, with which communication is possible with any radio terminal MS, is specified.

Returning to FIG. 21, the radio terminal MS, which received the UL-MAP message including the CDMA Allocation IE, sends a band request message ("BW Req GMH" in FIG. 21) for requesting a band sufficient for transmitting a data packet to the radio base station BS using the band allocated by the UL-MAP message (S202).

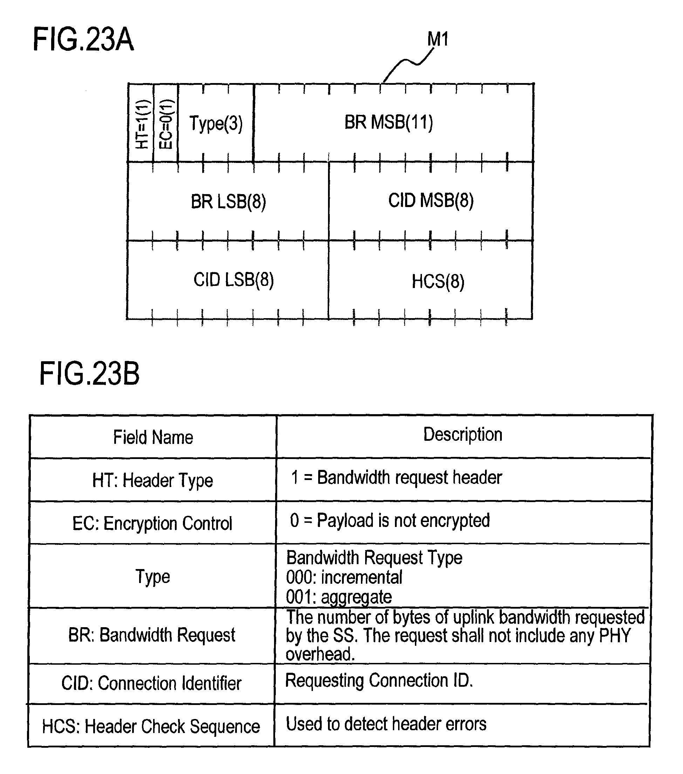

FIG. 23A depicts a format example of the band request message M1, and FIG. 23B describes the values inserted in each field. The requested band is inserted in the BR (Bandwidth Request) field.

Returning to FIG. 21, the radio base station BS, which received the band request message, judges whether allocation is possible, and allocates a predetermined band to the radio terminal MS using the UL-MAP message (S203). The UL-MAP message includes the CID (Connection Identifier) to indicate an identifier of the connection, UIUC which indicates the modulation method and encoding method, and Duration which indicates the band amount to be allocated.

Then the radio terminal MS sends the data packet using the allocated band (S204).

Patent Document 1 discloses a relay station and a base station according to the preamble of each independent claim. The radio base station (base site) may provide the relay station (relay resource) with a particular transmission parameter to use when relaying the transmission to, for example, the base site. Data may be retransmitted from the relay station using different frequencies from those on which the data was received from a terminal (remote unit)
Non-patent Document 1: IEEE Std 802.16-2004
Non-patent Document 2: IEEE Std 802.16e-2005
Patent Document 1: US2005/0232183A1

### DISCLOSURE OF THE INVENTION

The above mentioned band allocation is directly performed between the radio terminal MS and the radio base station BS, and does not disclose how the band is allocated when a relay station intervenes.

Accordingly, it is an object in one aspect of the present invention is to provide a radio base station, relay station, and band allocation method which can appropriately allocate a band in a radio communication between a radio terminal and the radio base station via the relay station.

Another aspect of the present invention is to provide a radio base station or the like which can allocate a band at high-speed without delay.

According to one aspect of the present invention, there is provided a relay station for relaying communication between a terminal and a radio base station which allocates to the terminal an uplink channel for notifying a requested band when any signal sequence out of a predetermined signal sequence group is received from the terminal, allocates a transmission band according to the requested band notified from the terminal via the channel, and allocates a predetermined transmission band to the relay station, the relay station comprising a transmission unit for sending a signal sequence to the radio base station; characterised in that the transmission unit is arranged to send a specific signal sequence not included in the predetermined signal sequence group, for obtaining a predetermined transmission band from the radio base station, without the relay station being allocated the uplink channel for notifying the requested band by the radio base station.

According to another aspect of the present invention, there is provided a radio base station for allocating to a terminal an uplink channel for notifying a requested band when any signal sequence out of a predetermined signal sequence group is received from the terminal, and allocating a transmission band according to the requested band notified from the terminal via the channel, comprising a control unit which allocates a predetermined transmission band to a relay station; characterised in that the control unit is arranged to allocate the predetermined transmission band in response to receiving a specific signal sequence, not included in the predetermined signal sequence group, from the relay station without allocating the uplink channel for notifying the requested band.

According to another aspect of the present invention, there is provided a band allocation method in a relay station for transmitting a message to a radio base station which allocates an uplink channel for notifying a request band when any signal sequence out of a predetermined signal sequence group is received from a terminal, and which allocates to the terminal a transmission band according to the request band notified from the terminal via the uplink channel, the band allocation method comprising: transmitting a specific signal sequence not included in the predetermined signal group; and receiving allocation of the transmission band from the radio base station, without being allocated the uplink channel for notifying the request band.

According to the present invention, a radio base station, relay station, and band allocation method, which can appropriately allocate a band in a radio communication between a radio terminal and the radio base station via the relay station, is provided. Also according to the present invention, a radio base station or the like which can allocate a band at high-speed without delay can be provided.

### BRIEF DESCRIPTION OF THE DRAWINGS

FIG. 1 is a diagram depicting a sequence example according to a first embodiment;
FIG. 2 is a diagram depicting a sequence example according to the first embodiment;
FIG. 3 is a diagram depicting a sequence example according to a second embodiment;
FIG. 4A depicts an example of a management table, and FIG. 4B is a flow chart depicting an example of processing in the radio base station;
FIG. 5 is a flow chart depicting an example of processing in the radio base station;
FIG. 6 is a block diagram depicting a configuration example of the radio base station;
FIG. 7A to FIG. 7C depict examples of the management table;
FIG. 8 is a block diagram depicting a configuration example of a relay station;
FIG. 9 is a flow chart depicting an example of processing in the relay station;
FIG. 10A and FIG. 10B depicts examples of the management table;
FIG. 11A is a flow chart depicting an example of processing in the radio base station, and FIG. 11B depicts an example of the management table;
FIG. 12A depicts an example of an association table, and FIG. 12B is a diagram depicting a sequence example according to a fifth embodiment;
FIG. 13A is a diagram depicting a sequence example according to a sixth embodiment, and FIG. 13B is a diagram depicting a format example of a second band request message;
FIG. 14 is a block diagram depicting a configuration example of a relay station;
FIG. 15A is a flow chart depicting an example of processing in the radio base station, and FIG. 15B is a flow chart depicting an example of processing in the relay station;
FIG. 16A is a diagram depicting a sequence example according to a seventh embodiment, and FIG. 16B is a flow chart depicting an example of processing in the radio base station;
FIG. 17A is a diagram depicting a sequence example according to an eighth embodiment, and FIG. 17B and FIG. 17C depict examples of a field including delay information;
FIG. 18 depicts a format example of an SBC-REQ message;
FIG. 19A is a diagram depicting a sequence example according to a ninth embodiment, and FIG. 19B depicts an example of information included in RNG-REQ;
FIG. 20 is a diagram depicting an image of a service according to a prior art;
FIG. 21 is a diagram depicting a sequence example according to a prior art;
FIG. 22 depicts a format example of a UL-MAP message; and
FIG. 23A depicts a format example of a band request message, and FIG. 23B depicts description thereof.

### BEST MODE FOR CARRYING OUT THE INVENTION

Preferred embodiments of the present invention will now be described.

### First embodiment

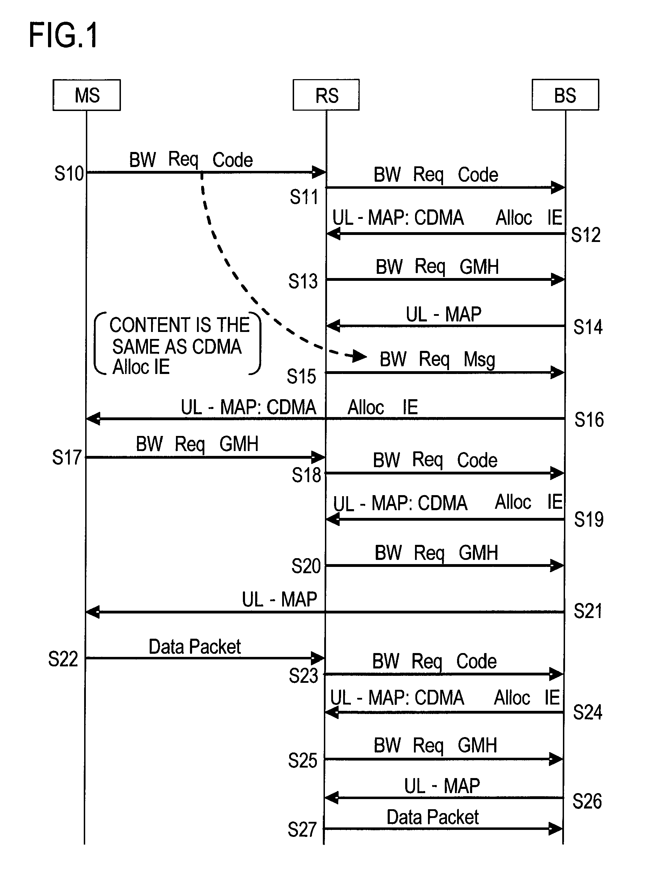

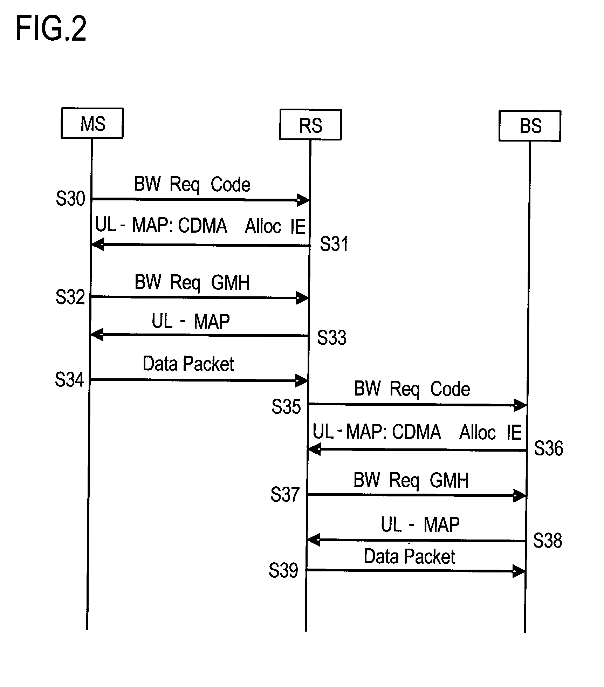

FIG. 1 and FIG. 2 are diagrams depicting sequence examples of band allocation according to a first embodiment. FIG. 1 is an example when a radio base station BS generates a UL-MAP message to allocate a transmission band to a radio terminal MS under a relay station RS (Centralized Scheduling), and FIG. 2 is an example when the relay station RS generates a UL-MAP message (Distributed scheduling). A radio communication system has the radio terminal MS, relay station RS and radio base station BS.

FIG. 1 will be described first. The radio terminal MS sends one CDMA code, included in a BW Req Code (signal sequence) group which indicates a band request, out of a CDMA code (signal sequence) group, to the relay station RS (S10). The BW Req Code group may be created by one CDMA code.

The relay station RS which received this CDMA code notifies such information (BW Req Msg) as the value of the code received from the radio terminal MS, transmission timing thereof, and sub-channel to the radio base station, but for this, the transmission band must be secured first.

Therefore, the relay station RS selects one CDMA code included in the BW Req Code group, and sends it to the radio base station BS, just like the radio terminal MS (S11).

The radio base station BS which received this BW Req Code cannot specify the relay station RS which sent this code. Hence the radio base station BS sends the UL-MAP message including a CDMA Allocation IE to the relay station RS so that a channel in the uplink direction, sufficient for the relay station RS to send a band request message, is allocated (S12). The CDMA Allocation ID contains an information including the value of this code, transmission timing, sub channel and Frame Number Index. Then the relay station RS sends a band request message (BW Req GMH) to the radio base station BS using the allocated channel in the uplink direction (S13).

The band request message is for requesting a transmission band required for transmitting a message (BW Req Msg in Fig.1) including the information on the code which the relay station RS received. The radio base station BS sends the CDMA Allocation IE to the radio terminal MS based on the BW Req Msg later (S16).

Then the radio base station BS judges whether band allocation is possible, and allocates a predetermined band to the relay station RS using the UL-MAP message, when it is possible (S14).

The relay station RS sends the transmission information message (BW Req Msg), which is used for band allocation from the radio base station BS to the radio terminal MS, to the radio base station BS, using the allocated predetermined band (S15).

The transmission information message includes an individual information on received codes, such as Frame Number Index, Ranging Code, Ranging Symbol, and Ranging Sub-channel.

Then the radio base station BS sends the UL-MAP message, including the CDMA Allocation IE, to the radio terminal MS (S16).

Then the radio terminal MS sends a band request message (BW Req GMH) to request a band to transmit the data packet to the relay station RS (S17).

The relay station RS sends the BW Req Code again to the radio base station BS, in order to receive band allocation to send the band request message to the radio base station BS (S18).

The radio base station BS allocates the band (S19), and the relay station RS sends the band request message received from the radio terminal MS using the allocated band (S20).

The radio base station BS judges whether band allocation is possible, and allocates the band to send the data packet to the radio terminal MS using UL-MAP when it is possible (S21).

The radio terminal MS sends the data packet to the relay station RS (S22).

Then in order to receive the band allocation for sending the data packet to the radio base station BS, the relay station RS sends the BW Req Code to the radio base station BS (S23). The radio base station BS allocates a band to send the band request message (BW Req GMH) to the relay station RS (S24), and using this band, the relay station RS sends the band request message to receive the band allocation for sending the data packet (S25). The radio base station BS allocates the band for sending the data packet to the relay station RS (S26), and the relay station RS sends the data packet to the radio base station BS using this band (S27).

Now FIG. 2 will be described where the relay station RS generates a UL-MAP message for allocating a band to the radio terminal MS.

First the radio terminal MS sends BW Req Code to the relay station RS (S30). Just like the example in FIG. 1, for the relay station RS to send the CDMA Allocation IE to the radio terminal MS, the radio terminal MS must be notified of such information as a value of the code, and the transmission timing and sub-channel thereof, and therefore sends this BW Req Code so as to receive allocation of a band sufficient for sending this information.

Then the relay station RS sends the CDMA Allocation IE with the allocated band for sending the band request message, to the radio terminal MS (S31).

The radio terminal MS sends a band request message (BW Req GMH) to receive allocation of a band to send a data packet, using the allocated band (S32).

The relay station RS allocates a band to the radio terminal MS using the UL-MAP message, based on the band request message (S33).

The radio terminal MS sends the data packet to the relay station RS, using the allocated band (S34).

The relay station RS requests the radio base station BS to allocate a band to send the received data packet, using BW Req Code (S35).

The radio base station BS sends the CDMA Allocation IE with the allocated band for sending the band request message to the relay station RS (S36), and using the band, the relay station RS sends a band request message for receiving allocation of a band to send a data packet to the base station BS (S37).

The base station BS allocates a band using the UL-MAP message (S38), and the relay station RS sends the data packet to the radio base station BS using the allocated band (S39).

As described above, according to the above examples, the data packet can be sent from the radio terminal MS to the radio base station BS via the relay station RS using an allocated band by sequentially sending code, message or the like via the relay station RS, so band allocation can be performed appropriately.

### Second embodiment

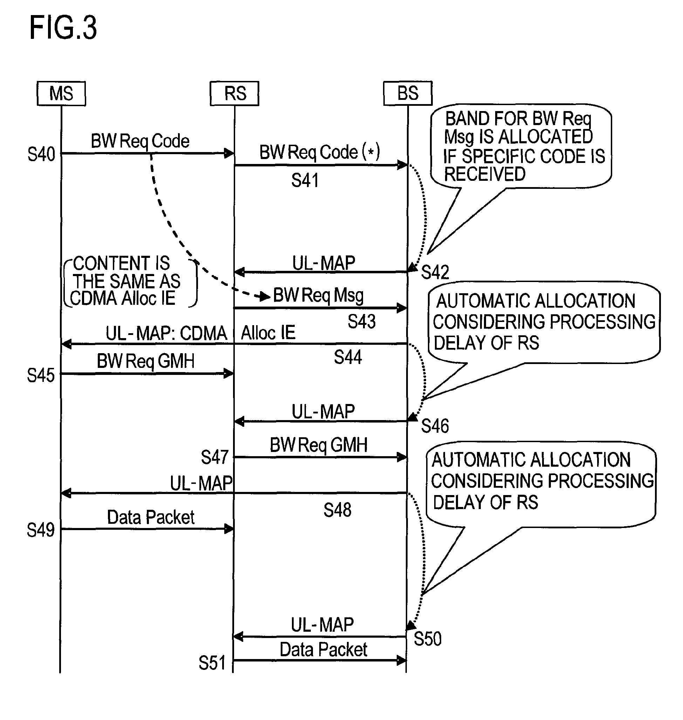

Now a second embodiment will be described with reference to FIG. 3 to FIG. 9.

The second embodiment is an example when the speed of the processing is higher than the speed of the processing of the first embodiment. In the second embodiment, the relay station RS, which received one CDMA code included in a predetermined CDMA code (signal sequence) group for BW Req (e.g. Codes 1, 2, 3) from the radio terminal MS, sends a predetermined specific CDMA code for BW Req (e.g. Code 4) to the radio base station BS.

In other words, the relay station uses a code, which is different from the CDMA code which the radio terminal MS uses for BW Req, as a specific code for the BW Req.

The radio base station BS which received this specific code recognizes that the band request is not from the radio terminal MS, but from the specific relay station RS, and allocates a required transmission band (predetermined band) to the relay station RS without having the relay station RS send the band request message.

If a plurality of relay stations exist under the radio base station BS, it is preferable to allocate a specific code to each relay station in advance, so that each relay station uses the allocated code as the specific code. This is because the relay station can be specified depending on the type of code, even if a plurality of relay stations exists.

After the band is allocated to the radio terminal MS, it is expected that the relay station RS will transfer the transmission data from the radio terminal MS to the radio base station BS, so a band required for transmitting a next message (see S47 in FIG. 3) is automatically allocated from the radio base station BS to the relay station (S46) so as to omit the band allocation request from the relay station RS, whereby a processing delay can be suppressed.

The radio communication system has the radio terminal MS, relay station RS and radio base station BS, just like the first embodiment. This is the same for the third and later embodiments. FIG. 3 is a diagram depicting an example of the band allocation sequence according to the second embodiment.

First in order to receive allocation of a band from the radio base station BS, the radio terminal MS sends one code included in the BW Req code group for the radio terminal to the relay station RS (S40), just like the first embodiment.

The relay station RS sends the specific BW Req code to the radio base station BS (S41). This code is a specific code allocated to the relay station RS in advance (a code which can be distinguished from the code used by the radio terminal). The radio base station BS which received this specific code can specify the relay station RS which sent this code.

FIG. 3 depicts an example when the radio terminal MS sends BW Req Code, but may send a different code, such as a code for Ranging, in the same way (details will be described in the ninth embodiment).

Therefore according to the second embodiment, some of a plurality of CDMA codes (e.g. 225 codes) are allocated not only to the four applications described above but also to the relay station RS, so as to obtain the predetermined band. (This is the same for the third and later embodiments to be described below.)

Allocation of the specific BW Req Code to the relay station RS can be performed when the relay station RS is performed by when the relay station RS is connected to the radio base station BS for example. This allocation may be included in such a message as a ranging response message (RNG-RSP ((Ranging Response)), basic function response message (SBC-RSP (SS Basic Capability Response)), and registration response message (REG-RSP (Registration Response)), which is sent from the radio base station BS to the relay station RS, for example.

Then the radio base station BS specifies the transmission source relay station RS using the received specific code, and allocates a predetermined band for sending the transmission information message (BW Req Msg) to the relay station RS using the UL-MAP message (S42). In other words, the radio base station BS automatically allocates a predetermined band for sending the transmission information message to the relay station RS, when the radio base station BS receives the specific code.

The transmission information message includes information required for the radio base station BS to send the CDMA Allocation IE to the radio terminal MS (e.g. Frame Number Index, Ranging Code, Ranging Symbol, Ranging Sub-channel), just like the first embodiment

Also, the UL-MAP message includes Duration to indicate a band to be allocated, CID (Connection Identifier) for identifying a connection, and UUIC to indicate the encoding method and modulation method, just like the first embodiment. Since the allocation destination relay station RS is specified, CID can also be specified, and the optimum encoding and modulation method for the relay station RS can also be specified using UUIC.

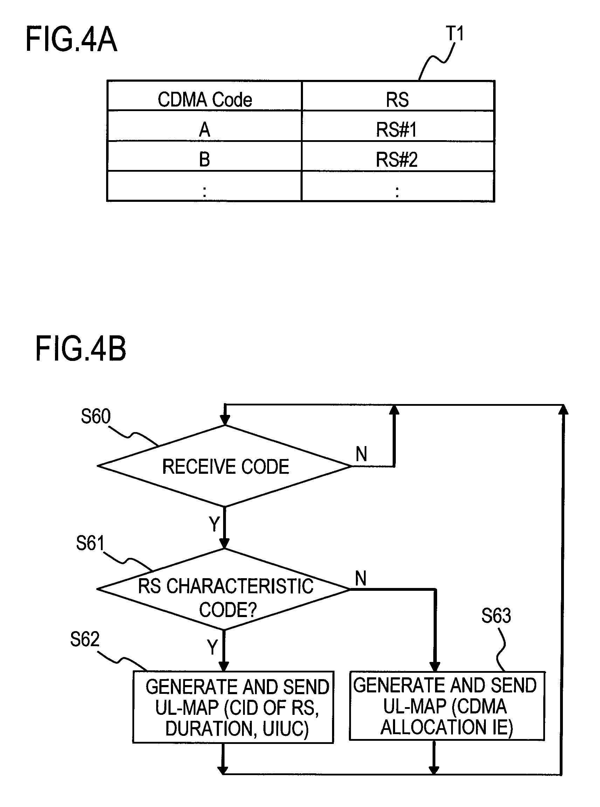

In order to search the transmission source relay station RS when the radio base station BS received the specific code, a first management table T1 depicted in FIG. 4A is stored in the radio base station BS. This is a table to indicate the relay station RS corresponding to each specific code. It is assumed that each relay station RS and radio base station BS share information in advance based on RNG-RSP or the like, so as to specify each specific code and each relay station RS.

Returning to FIG. 3, the relay station RS then sends the transmission information message using the allocated band (S43). Each information included in the transmission information message is readied for transmission to the radio station BS since the relay station RS stores the reception result when the code is received from the radio terminal MS.

Then the radio base station BS generates the UL-MAP message including the CDMA Allocation IE based on the transmission information message, and sends it to the radio terminal MS (S44).

Using the band allocated by the CDMA Allocation IE, the radio terminal MS sends the band request message (BW Req GMH) to the relay station RS (S45).

Here the relay station RS requires a band for sending this band request message to the radio base station BS, to be allocated by the radio base station BS, but in this case BW Req Code is not sent to the radio base station BS. This is because the radio base station BS automatically allocates the band for sending the band request message (BW Req GMH) to the relay station RS when a predetermined time has elapsed from reception of BW Req GMH (S46), after sending the CDMA Allocation IE (S44). It is preferable that this predetermined time is notified from the relay station RS to the radio base station BS by one of RNG-REQ, SBC-REQ and REG-REQ, which is sent when the relay station RS starts connection to the radio base station BS (Details will be described later in the eighth embodiment). This predetermined time can be a processing time which the relay station requires to send BW Req GMH.

The relay station RS sends the band request message (BW Req GMH) from the radio terminal MS to the radio base station BS, using the allocated band (S47).

The radio base station BS judges whether the band allocation is possible and allocates a band to the radio terminal MS using the UL-MAP message, based on the received band request message (S48).

The radio terminal MS sends the data packet to the relay station RS using the allocated band (S49).

The relay station RS does not send BW Req Code to indicate the band request to send the data packet to the radio base station BS, as mentioned above. The radio base station BS allocates the band sufficient to send the data packet using the UL-MAP message (S48), then allocates the band sufficient to send a data volume that the radio terminal MS can send, to the relay station RS after a predetermined time has elapsed, considering a processing delay in the relay station RS (S50). This processing delay is also notified to the radio base station BS using RNG-REQ or the like when connection is started.

The relay station RS sends the data packet from the radio terminal MS to the radio base station BS, using the allocated band (S51).

In this way, according to the second embodiment, the relay station RS, which received the BW Req Code from the radio terminal MS, sends a specific BW Req Code to the radio base station BS, and when this code is received, the radio base station BS allocates the predetermined band sufficient to send the transmission information message to the relay station RS. Therefore the predetermined band is allocated to the relay station RS by the radio base station BS even if the relay station RS does not request the band to the radio base station BS, so the required band allocation can be performed at high-speed. In concrete terms, the second embodiment can perform band allocation faster than the first embodiment, since the processings in S12 and S13 in the first embodiment are not performed.

When the relay station RS sends the band request message from the radio terminal MS to the radio base station BS as well, the relay station RS does not request the band to the radio base station BS, instead the radio base station BS allocates the band sufficient to send the band request message to the radio terminal MS, and after the predetermined time has elapsed, the radio base station BS allocates the band, which is sufficient for the relay station RS to send the band request message to the radio base station BS, to the relay station RS. Therefore the relay station RS need not send the BW Req Code to the radio base station BS, and the speed of processing can be increased.

For the transmission of the data packet from the radio terminal MS as well, the radio base station BS allocates a band, then after the predetermined time has elapsed, the radio base station BS allocates the band sufficient to send the data packet, to the relay station RS, considering the processing delay, so the speed of band allocation can be increased without sending a band request.

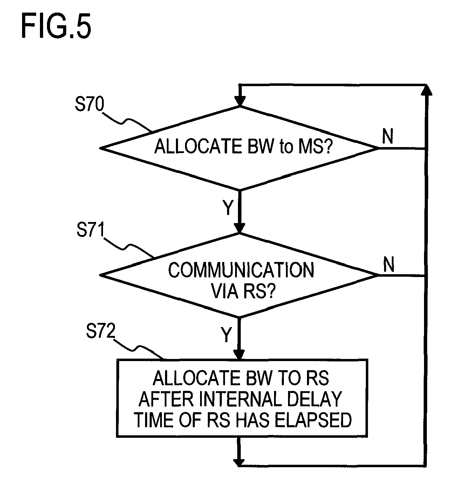

FIG. 4B is a flow chart depicting a processing when the radio base station BS received BW Req Code, and FIG. 5 is a flow chart depicting a processing when the radio base station BS allocates a band.

As FIG. 4B depicts, when BW Req Code is received (S60), the radio base station BS judges whether this code is specific code of the relay station RS (specific BW Req Code) (S61). If it is a specific code (Y), the radio base station BS generates the UL-MAP message to which CID, Duration and UUIC corresponding to the code are attached, and sends this UL-MAP message to the relay station RS (S62). This is a processing corresponding to S42 in FIG. 3.

On the other hand, if not the specific code (N in S61), the radio base station BS generates the UL-MAP message to which the CDMA Allocation IE is attached, and sends this UL-MAP message to the relay station RS. This is a processing corresponding to S12 in FIG. 1. The processing is repeated hereafter.

For the processing after band allocation, as depicted in FIG. 5, the radio base station BS judges whether the band is allocated to the radio terminal MS (S70), and the processing for band allocation is repeated (loop of N). This is a processing corresponding to S44 and S48 in FIG. 3.

If the band allocation is performed (Y in S70), the radio base station BS judges whether the radio terminal MS, to which the band is allocated, is communicating via the relay station RS (S71). For example, the radio band station BS has a management table to indicate a communication path of each radio terminal MS, and refers to this table for this judgment.

If not via the relay station RS (N), the radio base station BS moves back to S70, and repeats processing. If via the relay station RS (Y in S71), the radio base station BS allocates the band to the relay station RS after the predetermined time has elapsed (S72). This is a processing corresponding to S46 and S50 in FIG. 3. This processing is repeated hereafter.

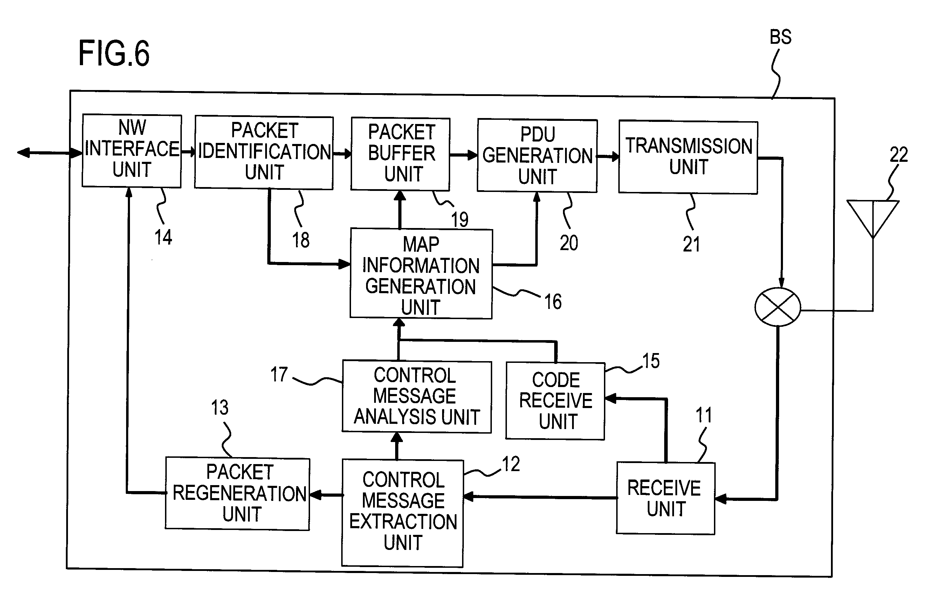

Now a configuration example of the radio base station will be described. FIG. 6 is a block diagram depicting a configuration example of the radio base station BS. The radio base station BS has a receive unit 11, control message extraction unit 12, packet regeneration unit 13, NW interface unit 14, code receive unit 15, MAP information generation unit 16, control message analysis unit 17, packet identification unit 18, packet buffer unit 19, PDU generation unit 20, and transmission unit 21.

When a code is received from an antenna 22, the receive unit 11 outputs information on the code to the code receive unit 15. When the message or data packet, other than code, is received, the receive unit 11 outputs it to the control message extraction unit 12.

The control message extraction unit 12 extracts a control message such as the band request message (BW Req GMH), and outputs it to the control message analysis unit 17. Other user packets are output to the packet regeneration unit 13 and are sent to a host network via the NW interface unit 14.

The code receive unit 15 outputs information on the received code and allocation band amount corresponding to the code value (amount for the band request message (amount for BW Req GMH) if BW Req Code is used) to the MAP information generation unit 16.

If the received code value is the specific code (specific BW Req Code), the code receive unit 15 notifies the MAP information generation unit 16 to generate the UL-MAP to allocate the predetermined band to the relay station RS. The band allocation is performed considering the modulation method and encoding method to be used for the communication with the relay station RS.

On the other hand, in the case of other codes, the transmission source of the code cannot be specified, so the code receive unit 15 requests the MAP information generation unit 16 to allocate the band using the CDMA Allocation IE.

The control message analysis unit 17 analyzes the band request message and specifies a transmission node (e.g. relay station RS) based on the CID of this message, and requests the MAP information generation unit 16 to allocate the required band, considering the modulation method and encoding method being used for the communication with the transmission node.

The MAP information generation unit 16 generates the MAP information based on the information from the code receive unit 15 or control message analysis unit 17. For the packet in the downlink direction received by the packet identification unit 18 via the NW interface unit 14, the packet identification unit 18 judges the destination radio terminal MS and QoS (Quality of Service) class, and notifies this information to the MAP information generation unit 16. Based on this information, the MAP information generation unit 16 generates and sends the MAL information in the downlink direction (DL-MAP).

When the predetermined time has elapsed after allocating the band to the radio terminal MS, the MAP information generation unit 16 allocates the band to the relay station RS which relays communication with the radio terminal MS. In this case, the modulation and encoding method (including the encoding rate) when the radio terminal MS communicates with the relay station RS may be different from when the relay station RS communicates with the radio base station BS, so the band sufficient to transmit the same data volume in these two communications is allocated.

For example, if the modulation method of the radio terminal MS is QPSK and the encoding rate thereof is 1/2, and if the modulation method of the relay station RS is 16QAM and the encoding rate thereof is 1/2, then the bandwidth of the band to be allocated to the relay station RS can be half of the band to be allocated to the radio terminal MS.

In the case of downlink as well, when the predetermined time has elapsed, after the data address to the radio terminal MS is sent to the relay station RS, the MAP information generation unit 16 allocates the band for the relay station RS to send this data to the radio terminal MS, even if the band request is not received from the relay station RS. The allocation is notified to each node (relay station RS and radio terminal MS) using DL-MAP. Downlink will be described in the seventh embodiment.

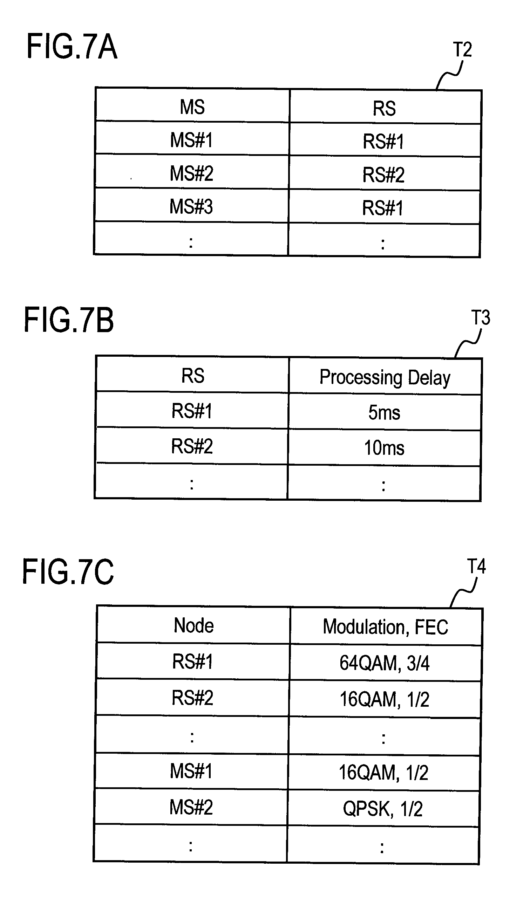

FIG. 7A to FIG. 7C depicts examples of the management tables to perform these processings. The MAP information generation unit 16 specifies the relay station RS to relay communication with the radio terminal MS using the second management table T2 (FIG. 7A), specifies the processing delay using the third management table T3 (FIG. 7B), and specifies the modulation method and encoding method of the communication target radio terminal MS and relay station RS using the fourth management table T4 (FIG. 7C). The processing delay of each relay station RS may be a number of frames, instead of the time depicted in FIG. 7B.

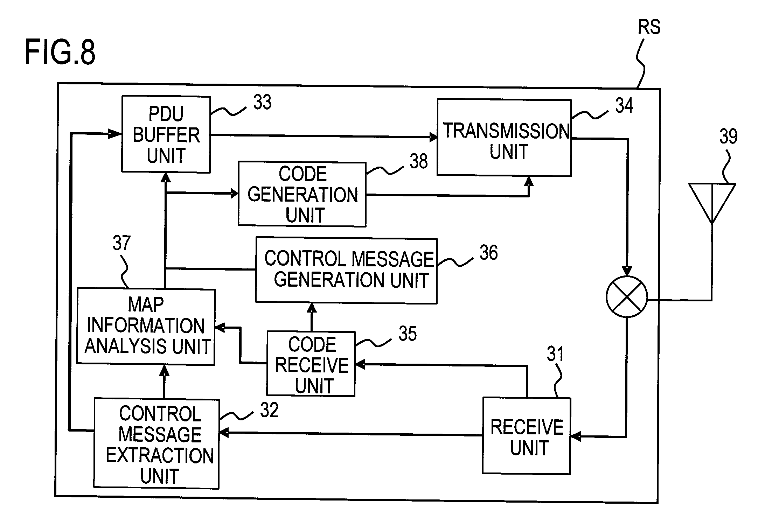

Now the configuration and operation of the relay station RS will be described. FIG. 8 is a block diagram depicting a configuration example of the relay station RS. The relay station RS has a receive unit 31, control message extraction unit 32, PDU buffer unit 33, transmission unit 34, code receive unit 35, control message generation unit 36, MAP information analysis unit 37, and code generation unit 38.

When the code (BW Req Code) sent from the radio terminal MS is received, the receive unit 31 outputs information on the code (information to transmit CDMA Allocation IE, such as code value, sub-channel which received the code, and symbol timing) to the code receive unit 35. The receive unit 31 also outputs information other than code (control messages and data packets) sent from the radio terminal MS and radio base station BS to the control message extraction unit 32.

The control message extraction unit 32 extracts the MAP information (UL-MAP, DL-MAP) from the control message, and outputs it to the MAP information analysis unit 37, and outputs the user packet to the PDU buffer unit 33.

The user packet is sent from the PDU buffer unit 33 to the radio terminal MS or radio base station BS via the transmission unit 34 and antenna 39.

The code receive unit 35 requests the control message generation unit 36 to generate a message to notify the information on the code to the radio base station BS (e.g. transmission information message (message transmitted in S43)). The code receive unit 35 also requests the MAP information analysis unit 37 to send the code to receive the band allocation to send the message (e.g. specific code transmitted in S41 in FIG. 3).

The control message generation unit 36 generates a message to be sent to the radio station BS, based on the information on the code sent from the code receive unit 35, and outputs it to the PDU buffer unit 33 which stores this message.

The MAP information analysis unit 37 analyzes the UL-MAP message from the control message extraction unit 32 (e.g. UL-MAP message received in S42 in FIG. 3), and acquires Sub-channel and Symbol timing with which code transmission is allowed, then the MAP information analysis unit 37 instructs the code generation unit 38 to generate the code (specific code) based on the code transmission notice received from the code receive unit 35, so that the acquired code is sent from the transmission unit 34 at the acquired code transmission timing of the code.

For the message which is stored from the control message generation unit 36 to the PDU buffer unit 33 (e.g. transmission information message), transmission of the message from the PDU buffer 33 is controlled based on the band allocation analyzed by the MAP information analysis unit 37.

The code and message are sent to the radio base station BS and radio terminal MS from the transmission unit 34 via the antenna 39.

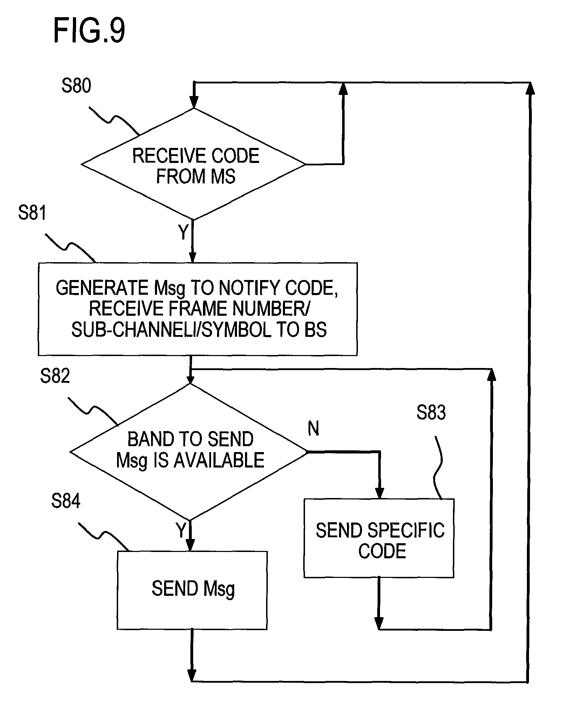

FIG. 9 is a flow chart depicting an example of processing executed in the relay station RS when the code is received from the radio base station BS.

When the code (BW Req Code in S10 in FIG. 3) is received from the radio terminal MS (Y in S80), the relay station RS generates the message to send the Code value, Frame Index, Sub-channel and Symbol to the radio base station BS (transmission information message) (S81).

The relay station RS judges whether the band to send the generated message is available (S82). The relay station RS judges this depending on whether the band sufficient to send this message was received.

If the band to send the message is available (Y), the relay station RS sends the message generated in S81 to the radio base station BS (S84). This processing corresponds to S43 in FIG. 3.

If the band to send the message is not available (N in S82), the relay station RS sends the specific BW Req Code to the radio base station BS (S83). This processing corresponds to S41 in FIG. 4.

### Third embodiment

Now a third embodiment will be described.

In the second embodiment, the example of the relay station RS sending BW Req Code indicated by the specific code, out of the CDMA codes to request the band, is described. The BW Req Code indicated by the specific code is allocated to each relay station RS independently (see FIG. 4A).

In the third embodiment, an identical specific code is allocated to a plurality of relay stations RS. A common CID (Connection ID, called a Multicast Polling CID in the third embodiment) is allocated to the relay station RS where identical specific code is allocated.

For example in FIG. 3, the relay station RS sends the BW Req Code indicated by the specific code (S41), but here the specific code commonly allocated to each relay station RS is sent. The radio base station BS which received this code recognizes that this is the band request from the relay station RS, and generates the UL-MAP message which includes information to allocate the band in the Multicast Polling CID, and sends it (S42). The specific code commonly allocated is generated by the code generation unit 38 of the relay station RS, and the UL-MAP message, including the Multicast Polling CID, is generated by the MAP information generation unit 16 of the radio base station BS.

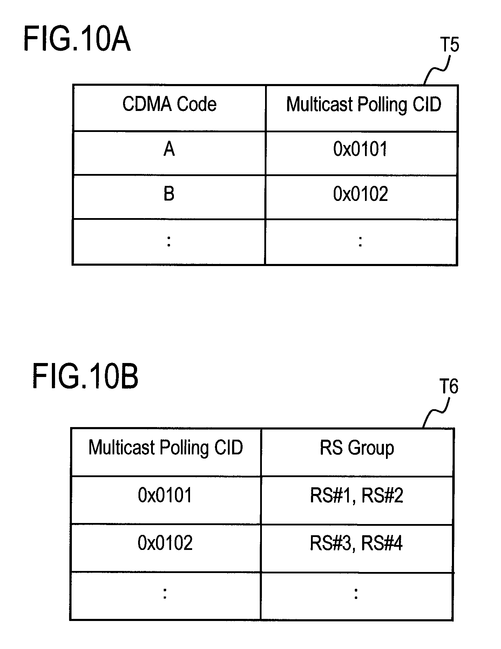

FIG. 10A is an example of a fifth management table T5, which depicts the correspondence of CDMA code and Multicast Polling CIDs. The radio base station BS refers to the fifth management table T5 and creates the UL-MAP message. The radio base station BS inserts a corresponding Multicast Polling CID to the "CID" field of the UL-MAP message (see FIG. 22), and sends the UL-MAP message.

In the first and second embodiments, the CID of each relay station RS, which is the CID to indicate each relay station RS, is inserted in the "CID" field. In the third embodiment, the common CID of the relay station RS is inserted in the "CID" field. By allocating an identical CID to a plurality of relay stations RS like this, the resources of specific codes can be saved. The subsequent processing is the same as the second embodiment.

A same band is allocated to each relay station RS to which the common CID is allocated, and each relay station RS can send the band request message to the radio base station BS using this band. For the allocation of the individual CID according to the second embodiment as well, a different band is allocated to each relay station RS.

It is preferable to allocate the identical CID for the Multicast Polling CID, to the radio base station BS to communicate with based on an identical modulation method and encoding method. Each relay station RS and the radio base station BS are not always communicating based on the identical modulation and encoding method, and if relay stations RS and the radio base stations BS communicating based on the same modulation and encoding method are grouped, and the identical CID is allocated to the group, the modulation and encoding method used for the allocated band can be optimized.

FIG. 10B depicts a sixth management table T6 allocated like this. A common Multicast Polling CID ("0x0101") is allocated to a plurality of relay stations RS ("RS#1" and "RS#2").

### Fourth embodiment

Now a fourth embodiment will be described.

According to the second embodiment, if the band is allocated to the radio terminal MS (S44, S48 in FIG. 3), the band is automatically allocated to the relay station RS when the predetermined time has elapsed (S46, S50 in FIG. 3).

Therefore if the relay station RS cannot normally receive the data sent from the radio terminal MS, the band allocated to the radio station RS may not be used and is therefore wasted. In particular, the band allocation (S48 in FIG. 3) for the band request message (BW Req GMH, S45 and S47 in FIG. 3) is for the data packet, and an error easily occurs if the packet length is long. Also a wideband is often allocated to the data packet, and if the relay station RS cannot receive the data packet, the band allocation becomes very inefficient.

To prevent this, it is judged which QoS (Quality of Service) class of connection (CID) the band allocation to the band request message is used for. The CID in the band request message (see FIG. 23A and FIG. 23B) depicts a QoS class (e.g. "best effort", "band securing") of data to be sent next, so according to the class, a case of automatically allocating the band and a case of allocating the band based on a new band request message from the relay station RS are separated. Thereby band allocation according to the QoS class of data packet becomes possible.

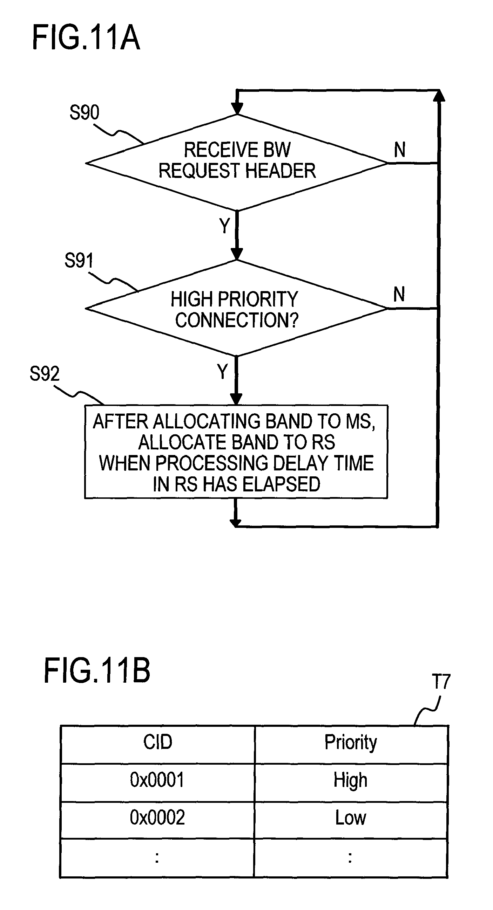

FIG. 11A is a flow chart depicting a processing operation in the radio base station BS when the band request message is received from the relay station RS.

When the band request message (BW Req GMH) is received (Y in S90), the radio base station BS judges whether this is the high priority connection or not (S91). FIG. 11B depicts an example of a seventh management table T7 for managing the correspondence of a connection and priority. When the band request message is received from the relay station RS, the radio base station BS extracts the CID from the "CID" field in the message (see FIG. 23A and FIG. 23B), and searches the priority in the seventh management table T7. If priority is "high" as a result of the search, the connection is "high priority connection", and if "low", the connection is not "high priority connection".

This judgment is made by the control message analysis unit 17 of the radio base station BS.

Returning to FIG. 11A, if "high priority connection" (Y in S91), the radio base station BS allocates the band to the radio terminal MS, then allocates the band to the relay station RS when the predetermined time has elapsed (S92). Then processing returns to S90, and the same processing is repeated.

If not "high priority connection" (N in S91), the radio base station BS waits for receiving the new band request message from the relay station RS (S90), and the processing is repeated.

According to the processing depicted in FIG. 11A, band allocation from the radio base station BS is not performed unless the CID of the band request message is high priority connection. However, the band request can be specified in the data packet, so if an insufficient band is specified by this new band request, the connection can be high priority connection, and the radio base station BS can allocate the band to the relay station RS.

Since the rest of the processings are the same as the second embodiment, the speed of band allocation processing can be increased.

### Fifth embodiment

Now the fifth embodiment will be described.

In the second embodiment, the specific code value (value of a specific code in the second embodiment, see FIG. 4A) is allocated to the relay station RS, and the radio base station BS specifies the relay station RS by requesting the band using the code value, therefore the band can be allocated to the relay station RS with specifying the optimum modulation method or the like.

Generally the relay station RS is often arranged in sight of the radio base station BS, and the communication quality between them is good in many cases. In such the case, the optimum modulation method or the like for each relay station RS is more likely to be similar.

Therefore in such the case, instead of corresponding the relay station RS to each code, each code can be directly associated with the band to be requested, whereby transmission of the band request massage (BW Req GMH) from the relay station RS can be omitted, and the speed of band allocation processing can be higher than the case of processing.

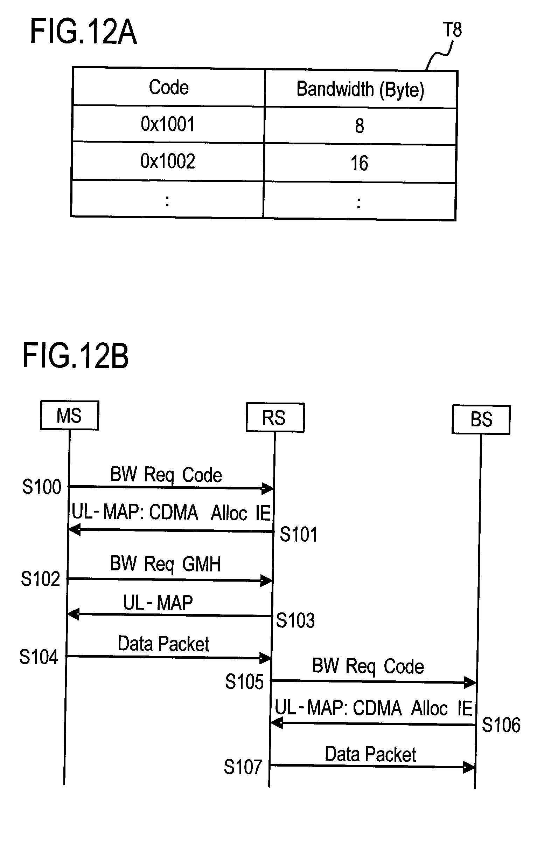

FIG. 12A depicts an example of an association table T8 which associates each code and band amount. The association table T8 stores bands associated with each code value to indicate a management band request.

FIG. 12B is a diagram depicting a sequence of processing operation when the code and band are associated.

First the radio terminal MS sends BW Req Code to the relay station RS (S100). The relay station RS allocates the band sufficient to send the band request message using UL-MAP (S101).

Using the allocated band, the radio terminal MS sends the band request message (BW Req GMH) to the relay station RS (S102), and the radio base station BS judges the availability of the band requested by the band request message, and allocates a predetermined band (S103).

The radio terminal MS sends the data packet to the relay station RS, using the allocated band (S104).

The relay station RS sends BW Req Code to the radio base station BS, using the code corresponding to the minimum band required for sending the data packet (S105). For example, if 15 bytes of transmission are required, code 0x1002 is sent.

The radio base station BS sends the UL-MAP message including the CDMA Allocation IE to allocate the maximum band corresponding to the received code, to the relay station RS (S106). The modulation method and encoding method to be used for the allocated band are those with which all the relay stations RS can communicate with the radio base station BS (inserted in the "UIUC" field).

Using the allocated band, the relay station RS sends the data packet to the radio base station BS (S107).

By directly associating the code and band like this, the band request message (BW Req GMH) from the relay station RS to the radio base station BS, and the corresponding UL-MAP message from the radio base station BS to the relay station RS are omitted, and speed of the processing can be faster than the speed of the first embodiment (FIG. 2).

In the processing of S105 in the relay station RS, BW Req Code, using the code corresponding to the band sufficient to send the data packet, is generated in the code generation unit 38 based on the instruction of the MAP information analysis unit 37, and is set. In the processing of S106 in the radio base station BS, the code receive unit 15 determines the band amount according to the association table T8, and outputs it to the MAP information generation unit 16, and the MAP information generation unit 16 generates and sends the UL-MAP message.

### Sixth embodiment

Now a sixth embodiment will be described. The sixth embodiment is an example of a relay station RS generating a UL-MAP message and allocating the band to the subordinate radio terminal MS (Distributed Scheduling). In the sixth embodiment, a desired band allocation time (Allocation Time) is inserted in the band request message to be sent from the relay station RS to the radio base station BS. When this time arrives, the radio base station BS allocates the band to the relay station RS, so the relay station RS can send the data packet from the radio terminal MS to the radio base station BS at an appropriate timing.

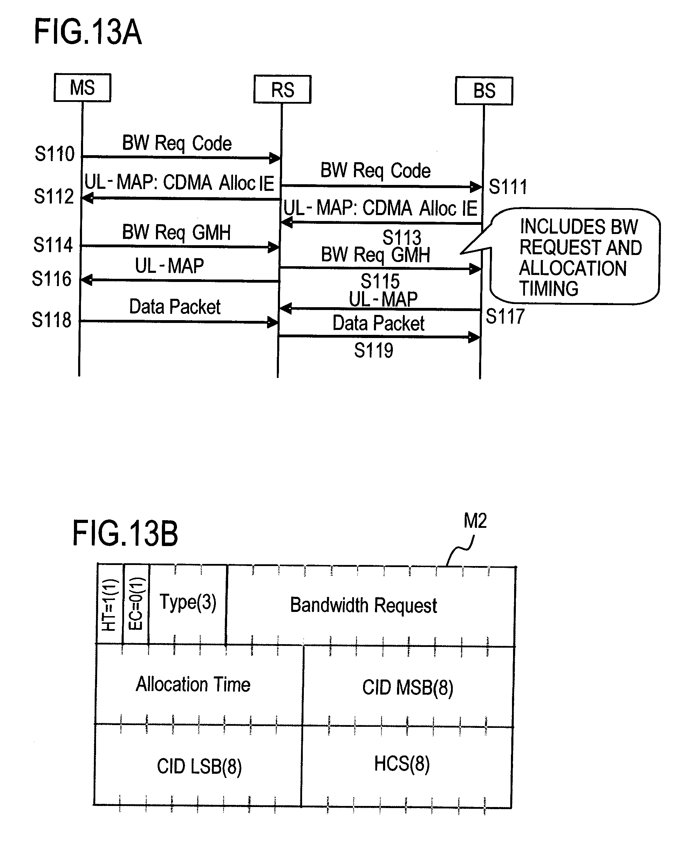

FIG. 13A is a diagram depicting an operation sequence according to the present embodiment.

Firstly, the radio terminal MS sends BW Req Code to the relay station RS (S110). The relay station RS sends BW Req Code to the radio base station BS to request allocating the band sufficient to send the band request message (S111).

The relay station RS also sends the UL-MAP message including the CDMA Allocation IE to the radio terminal MS, so that the band request message from the radio terminal MS can be sent (S112).

The radio terminal MS sends the band request message (BW Req GMH) using the allocated band (S114). On the other hand, the relay station RS receives the UL-MAP message including the CDMA Allocation IE (S113), and sends the band request message using this band (S115).

This band request message (hereafter called "second band request message" in the sixth embodiment) includes a desired allocation time. The desired allocation time is a time when the relay station RS allocates the band to the radio terminal MS (later mentioned S116), and receives a time of receiving the data packet (S118) plus a processing delay in the relay station RS, or a time just before the time when the data packet is received from the radio terminal MS and this data packet is sent to the radio base station BS the quickest way.

FIG. 13B depicts a format example of the second band request message. A desired time desired by the relay station RS is inserted in the "Allocation Time" field. This is a time elapsed from the time when the second band request message is sent. The radio base station BS, which received the second band request message, allocates the requested band amount, or a part thereof, to the relay station RS after at least the Allocation Time has elapsed.

Returning to FIG. 13A, the radio base station BS allocates the band to the relay station RS when the desired allocation time arrives (S117), and the relay station RS receives the data packet from the radio terminal MS (S118), and sends this data packet to the radio base station BS using the allocated band (S119).

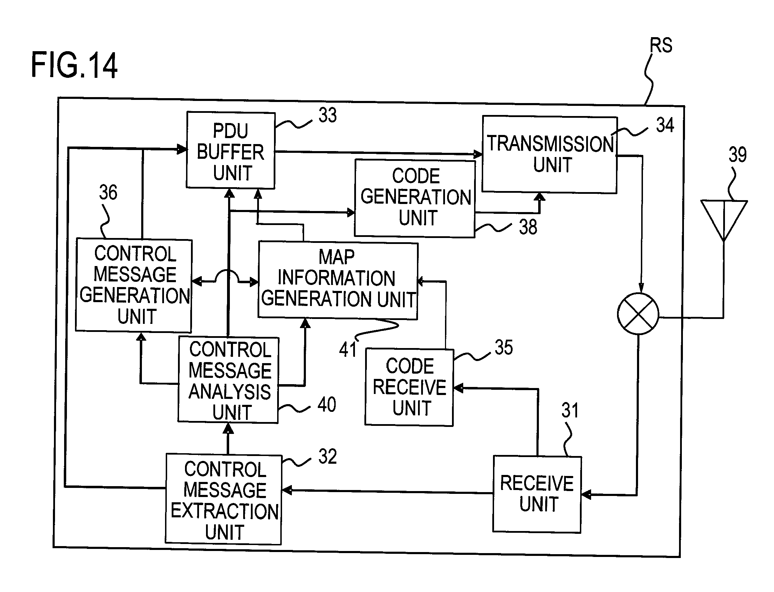

The block configuration example of the radio base station BS of the sixth embodiment is the same as the second embodiment (see FIG. 6). FIG. 14 is a block diagram depicting a configuration example of the relay station RS.

The radio base station BS will now be described in brief with reference to FIG. 6. The radio base station BS operates roughly the same way as in the second embodiment, but the difference is that if Allocation Time is included in the band request message, the control message analysis unit 17 requests allocation of the band to the MAP information generation unit 16 after the Allocation Time has elapsed. And in the MAP information generation unit 16, the UL-MAP message is generated and sent to the relay station RS.

Compared with the second embodiment (see FIG. 8), in the configuration of the relay station RS of the sixth embodiment, the relay station further has a control message analysis unit 40 and MAP information generation unit 41, instead of the MAP information analysis unit 37.

The MAP information generation unit 41 receives a notice instructing that the band is allocated to the radio terminal MS using the CDMA Allocation IE, along with the received code value and allocation band amount, from the code receive unit 35.

The control message analysis unit 40 analyzes the UL-MAP received from the radio base station BS (from the control message extraction unit 32), and acquires Sub-channel and Symbol timing with which code can be sent, then instructs the code generation unit 38 to generate and send a predetermined code. The control message analysis unit 40 also instructs the PDU buffer unit 33 to send the data packet and control message to be sent to the radio base station BS, using the allocated band. If the band request message is received from the radio terminal MS, the control message analysis unit 40 notifies the content of the message to the control message generation unit 36, and also notifies the MAP information generation unit 41 to allocate the band to the radio terminal MS.

The control message generation unit 36 generates the second band request message including the band amount requested by the radio terminal MS and time information, stores it in the PDU buffer unit 33, and sends it to the radio base station BS. The desired band allocation time is a value of the time when this band is allocated to the radio terminal MS, plus the processing delay of the relay station RS, or later.

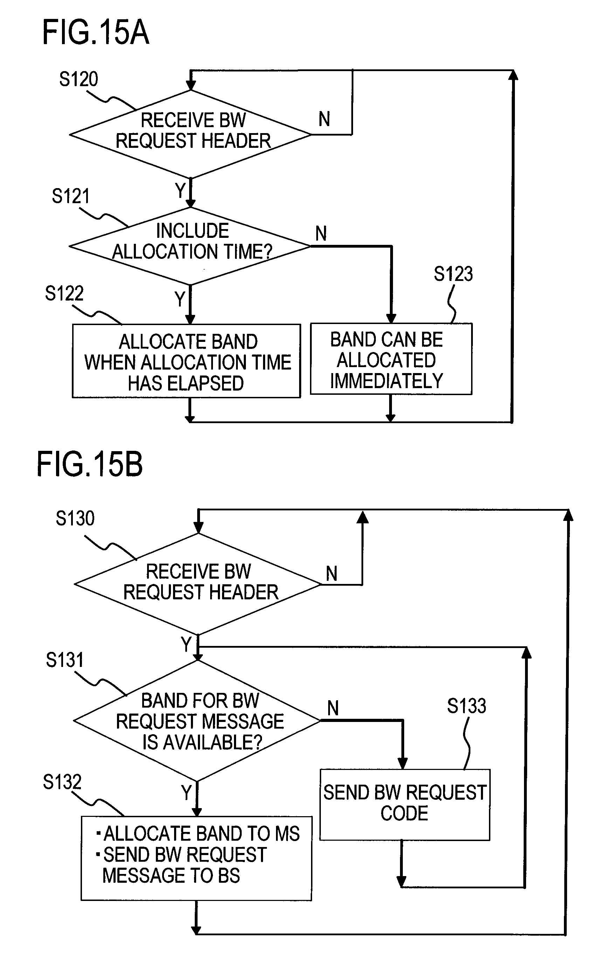

FIG. 15A is a flow chart depicting the operation of processing of the radio base station BS according to the present embodiment, and FIG. 15B is a flow chart depicting the operation of the relay station RS.

As FIG. 15A depicts, when the band request message is received from the relay station RS (Y in S120), the radio base station BS judges whether Allocation Time is included in the band request message (S121), and if included (Y), the radio base station BS allocates the band to the relay station RS after Allocation Time has elapsed (S122). On the other hand, if Allocation Time is not included in the band request message (N in S121), the radio base station BS immediately allocates the band (S123).

If the relay station RS receives the band request message from the radio terminal MS, as depicted in FIG. 15B (Y in S130), the relay station RS judges whether the band sufficient to send the band request message is available (S131).

If the band has already been secured (Y), the relay station RS allocates the band to the radio terminal MS, and sends the band request message to the radio base station BS (S132). This corresponds to the processing from S114 to S116 in FIG. 13A.

If the band is not available (N in S131), the relay station RS sends CDMA code (BW Req Code) to indicate the band request (S133). This corresponds to receiving the band request message in S114, and sending the BW Req Code in S115 in FIG. 13A. The subsequent processing is the same as the processing in S113 and later, although timing is shifted.

### Seventh embodiment

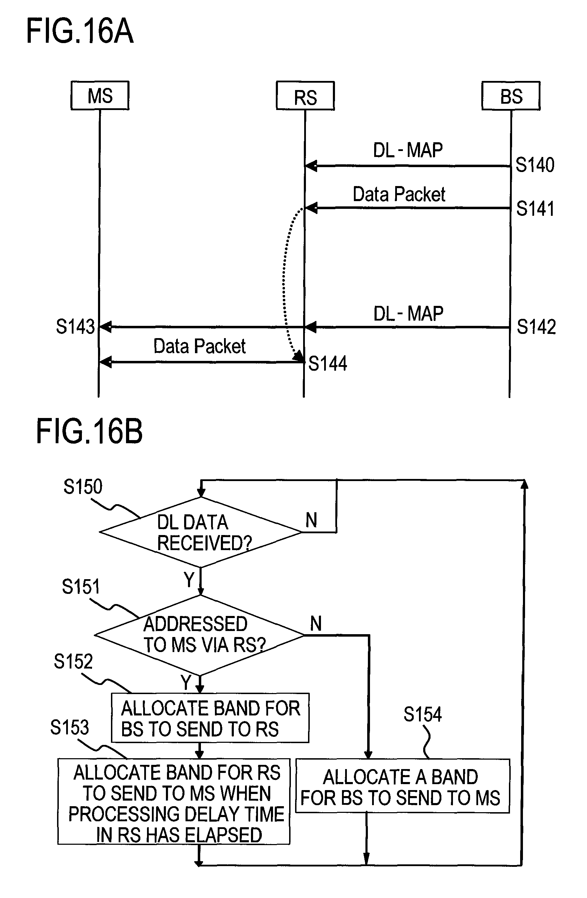

Now the seventh embodiment will be described. The seventh embodiment is an example of band allocation in the downlink direction. FIG. 16A depicts the sequence diagram, and FIG. 16B depicts the flow chart.

As FIG. 16A depicts, the radio base station BS generates the DL-MAP message to allocate the band, to send the data packet which is to be sent to the radio terminal MS via the relay station RS, to the relay station RS, and sends the DL-MAP message to the relay station RS (S140). This DL-MAP message is generated by the MAP information generation unit 16 (see FIG. 6).

The relay station RS receives the data packet from the radio base station BS according to the received DL-MAP message (S141). The data packet from the radio base station BS is generated and sent by a path from the NW interface unit 14 to the transmission unit 21 (see FIG. 6), for example. In the relay station RS, the data packet is received via the receive unit 31 (see FIG. 8).

The radio base station BS generates the DL-MAP message to allocate the band for the relay station RS to send the data packet to the radio terminal MS, and broadcasts the DL-MAP message (S142, S143).

This DL-MAP message is sent from the radio base station BS to the radio terminal MS when the delay time, considering the processing delay of the relay station RS, has elapsed after the relay station RS received the data packet from the radio base station BS, with specifying a time when the relay station RS can send the data packet to the radio terminal MS as the transmission timing. In other words, for the transmission timing of the data packet specified by the DL-MAP in S140, the transmission timing of the data packet specified by the DL-MAP in S142 plus the predetermined delay time is set.

The relay station RS sends the data packet to the radio terminal MS, using the band allocated in the DL-MAP received in S142, and the radio terminal MS receives the data packet according to the information in DL-MAP (S144).

The band allocation operation in the radio base station BS will be described with reference to FIG. 16B.

First the radio base station BS judges whether data for downlink (DL Data) is received (S150), and waits until this data is received if not received (loop N).

If this data is received (Y), the radio base station BS judges whether this data is data addressed to the radio terminal MS via the relay station RS (S151). As described in the second embodiment, the radio base station BS stores the management table to depict the transmission paths of the radio terminal MS, and this judgment is made by referring to this management table.

If the data is the data to the radio terminal MS via the relay station RS (Y in S151), the radio base station BS allocates the band to send this data, to the relay station RS (S152). This is processing corresponding to S140 in FIG. 16A. This processing is performed by the MAP information generation unit 16 (see FIG. 6).

The radio base station BS allocates the band for the relay station RS to send data to the radio terminal MS (S153). This is a processing corresponding to S142 in FIG. 16A, and is performed by the MAP information generation unit 16.

If the data is not data addressed to the radio terminal MS via the relay station RS (N in S151), the radio base station BS directly allocates the band for sending the data to the radio terminal MS (S154). This is a processing performed by the MAP information generation unit 16.

In this way, for the downlink direction as well, the band can be appropriately allocated and the data packet can be sent from the radio base station BS to the radio terminal MS via the relay station RS. At this time, the band to send the data packet from the radio station RS to the radio terminal MS is allocated according to the timing at which the transmission of the data packet from the relay station RS becomes possible. Therefore the data packet can be sent from the relay station RS to the radio terminal MS at an appropriate timing.

The band allocation for the downlink direction according to the seventh embodiment can also be performed for the above mentioned third to sixth embodiments. Eighth embodiment

Now the eighth embodiment will be described. In the second embodiment, after the band is allocated to the radio terminal MS, the band is automatically allocated to the relay station RS after the predetermined time has elapsed. The eighth embodiment is an example when the relay station RS sends the predetermined time to the radio base station BS in advance.

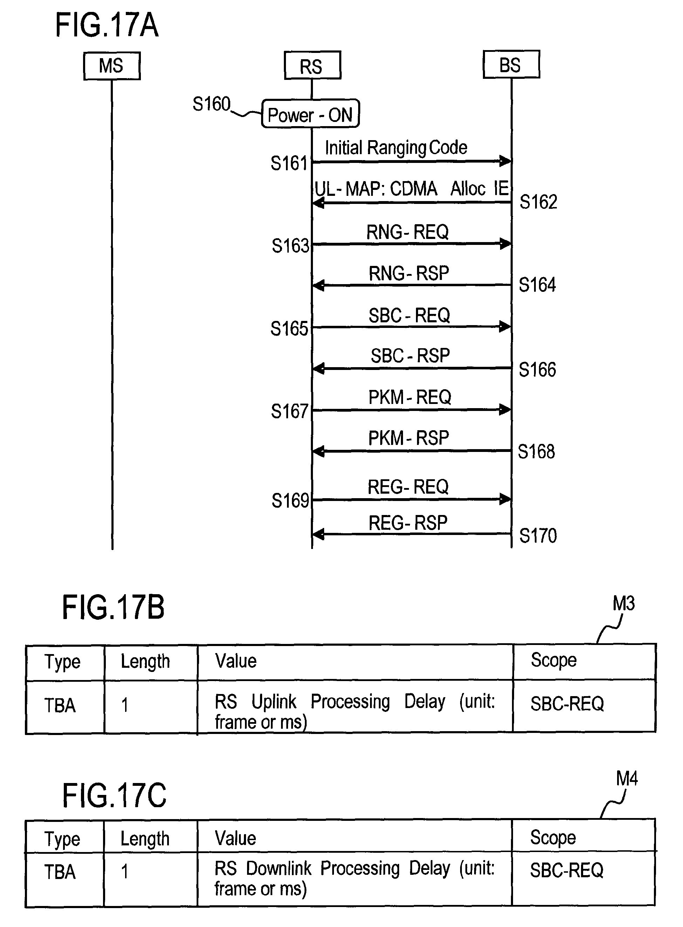

FIG. 17A is a diagram depicting an example of a sequence according to the eighth embodiment. After power ON (S160), the relay station RS executes ranging processing (S161 to S164). This is a processing for adjusting the timing and transmission power between the relay station RS and radio base station BS.

Then a processing to notify a list of capabilities related to the physical layers, such as maximum transmission power, of the relay station RS to the radio base station BS is performed (S165 to S166).

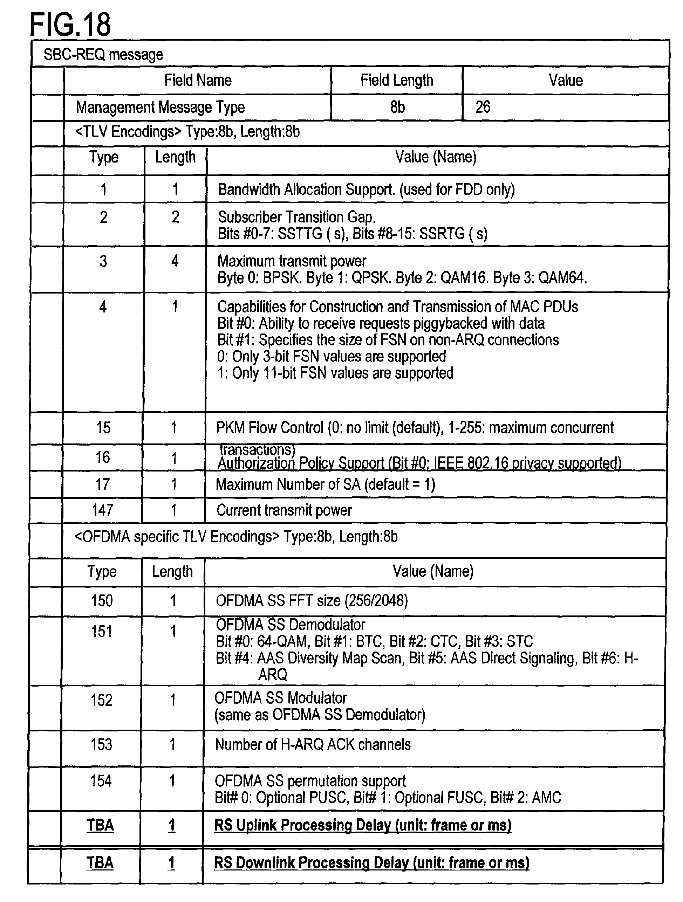

As FIG. 17B and FIG. 17C depict, time information including delay information in the uplink direction or delay information in the downlink direction is inserted in the TBA field of an SBC-REQ (basic function) message, which is sent from the relay station RS. FIG. 18 depicts an example of an SBC-REQ message, in which the time information is inserted. This message is generated by the control message unit 36 of the relay station RS, for example.

Then processing to authenticate the relay station RS and to exchange an encryption key used for encryption is performed (S167 to S168), and processing to register the capabilities of the MAC layer and upper layer is performed (S169 to S170).

In this series of the initial sequence, the relay station RS sends the SBC-REQ (basic function request message), including the delay time, to the radio base station BS in the example described above, but delay information may be inserted in the ranging request message (RNG-REQ), authentication request message (PKM-REQ) or registration request message (REG-REQ). In this case, delay information can be inserted in an open field or the like, just like FIG. 18.

Thereby as depicted in the second embodiment, the band is automatically allocated from the radio base station BS to the relay station RS when the predetermined time (time specified by the time information) has elapsed.

### Ninth embodiment

Now a ninth embodiment will be described. In the second embodiment, the band is allocated using CDMA code (BW Req Code), which indicates the band allocation. The ninth embodiment is an example of performing band allocation using Ranging Code out of CDMA Code.

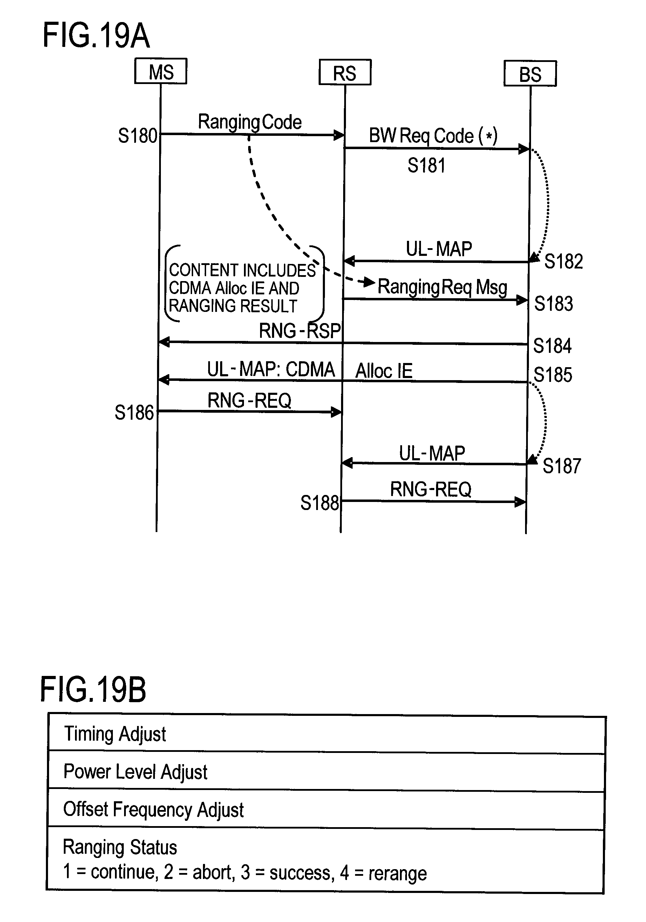

FIG. 19A is a diagram depicting a sequence example of the ninth embodiment.

Firstly, the radio terminal MS sends Ranging Code to the relay station RS (S180). The radio terminal MS requests the band allocation to send the ranging request message (RNG-REQ).

The relay station RS sends BW Req Code indicated by the specific code to the radio base station BS (S181). This is the same as the second embodiment. The relay station RS request the band sufficient to send a ranging information message (Ranging Req Msg) to the radio base station BS.

Because of the reception of the specific code, the radio base station BS automatically allocates a predetermined band by sending a UL-MAP message (S182), and the relay station RS sends the ranging information message to the radio base station BS using this allocated predetermined band (S183).

This ranging information message includes not only the code value of Ranging Code, Frame Index, Sub-channel and Symbol (information to send CDMA Allocation IE), but also correction information, level, and frequency information (information to send a ranging response message (RNG-RSP)).

The radio base station BS extracts correction information etc. from the ranging information message, sends the ranging response message (RNG-RSP) to the radio terminal MS (S184), extracts a code value etc. from the ranging information message, and sends UL-MAP including CDMA Allocation IE to the radio terminal MS (S185).

The radio terminal MS sends the ranging request message (RNG-REQ) to the relay station RS using the band allocated by UL-MAP (S186).

The radio base station BS considers a processing delay of the relay station RS, just like the second embodiment, and sends the UL-MAP to the relay station RS when the delay time has elapsed (S187), and the relay station RS sends the ranging request message (RNG-REQ) to the radio base station BS using the band allocated by the UL-MAP message (S188).

FIG. 19B depicts an example of information included in the ranging response message (RNG-RSP). Such information as timing, power level and offset frequency adjustment is included, and this information is included in the ranging information message (Ranging Req Msg).

In this way, operation similar to the second embodiment can be performed by using ranging code, and band allocation can be performed at high-speed.

The configuration of the radio base station BS and relay station RS are the same as the second embodiment (see

FIG. 6 and FIG. 8). The specific code is generated by the code generation unit 38, and the ranging information message is generated and sent by the control message generation unit 36. In the radio base station BS, the ranging response message is generated and sent by the MAP information generation unit 16.

### INDUSTRIAL APPLICABILITY

The present invention can be suitably applied to radio communication which is performed between a radio terminal and radio base station via a relay station.

## Claims

1. A relay station (RS) for relaying communication between a terminal (MS) and a radio base station (BS) the radio base station (BS) allocates to the terminal (MS) an uplink channel for notifying a requested band when any signal sequence out of a predetermined signal sequence group is received from the terminal, allocates a transmission band according to the requested band notified from the terminal via the channel, and allocates a predetermined transmission band to the relay station, the relay station (RS) comprising:
a transmission unit (34) for sending a signal sequence to the radio base station (BS);
the transmission unit (34) is arranged to send a specific signal sequence not included in the predetermined signal sequence group, for obtaining a predetermined transmission band from the radio base station (BS), without the relay station being allocated the uplink channel for notifying the requested band by the radio base station.

2. The relay station (RS) according to Claim 1, wherein the relay station is arranged to receive the specific signal sequence specified by the radio base station (BS).

3. A radio base station (BS) for allocating to a terminal (MS) an uplink channel for notifying a requested band when any signal sequence out of a predetermined signal sequence group is received from the terminal, and allocating a transmission band according to the requested band notified from the terminal via the channel, comprising:
a control unit (15, 16, 17) which allocates a predetermined transmission band to a relay station (RS); the control unit (15, 16, 17) is arranged to allocate the predetermined transmission band in response to receiving a specific signal sequence, not included in the predetermined signal sequence group, from the relay station (RS) without allocating to the relay station the uplink channel for notifying the requested band.

4. The radio base station (BS) according to Claim 3, wherein the control unit (15, 16, 17) allocates an independent band to each of relay stations (RS) from which is sent the specific signal sequence, when the transmission band is allocated to the relay station.

5. The radio base station (BS) according to Claim 3, wherein the control unit (15, 16, 17) allocates a band shared by a plurality of relay stations (RS), when the control unit allocates the transmission band to the relay station.

6. The radio base station (BS) according to Claim 3, wherein the control unit (15, 16, 17) allocates a transmission band corresponding to the specific signal sequence to the relay station (RS), when the specific signal sequence is received.

7. A band allocation method in a relay station (RS) for transmitting a message to a radio base station (BS) the radio base station (BS) allocates an uplink channel for notifying a request band when any signal sequence out of a predetermined signal sequence group is received from a terminal (MS), and the radio base station (BS) allocates to the terminal a transmission band according to the request band notified from the terminal via the uplink channel, the band allocation method comprising:
transmitting by the relay station (RS) a specific signal sequence not included in the predetermined signal group; and
receiving allocation of a predetermined transmission band from the radio base station (BS), without being allocated to the relay station the uplink channel for notifying the request band.

## Patentansprüche

1. Relais-Station (RS) zum Weiterreichen von Kommunikation zwischen einem Endgerät (MS) und einer Funkbasisstation (BS), wobei die Funkbasisstation (BS)
dem Endgerät (MS) ein Aufwärtsstreckenkanal zum Mitteilen eines angeforderten Bands zuweist, wenn irgendeine Signalsequenz aus einer vorbestimmten Signalsequenzgruppe aus dem Endgerät empfangen wird, ein Sendeband anhand eines aus dem Endgerät über dem Kanal mitgeteilten angeforderten Bandes zuweist und ein vorbestimmtes Sendeband der Relais-Station zuweist, wobei die Relais-Station (RS) umfasst:
eine Sendeeinheit (34) zum Senden einer Signalabfolge an die Funkbasisstation (BS);
die Sendeeinheit (34) ausgelegt ist, eine spezifische Signalsequenz, die nicht in der vorbestimmten Signalsequenzgruppe enthalten ist, zum Ermitteln eines vorbestimmten Sendebandes aus der Funkbasisstation (RS) zu senden, ohne dass der Relais-Station der Aufwärtsstreckenkanal zum Mitteilen des angeforderten Bandes durch die Funkbasisstation zugewiesen wird.

2. Relais-Station (RS) gemäß Anspruch 1, wobei die Relais-Station ausgelegt ist, die durch die Funkbasisstation (BS) spezifizierte, spezifische Signalsequenz zu empfangen.

3. Funkbasisstation (BS) zum Zuweisen eines Aufwärtsstreckenkanals zu einem Endgerät (MS), um ein angefordertes Band mitzuteilen, wenn eine Signalsequenz aus einer vorbestimmten Signalsequenzgruppe aus dem Endgerät empfangen wird, und Zuweisen eines Sendebands anhand des angefragten Bands, das aus dem Endgerät über den Kanal mitgeteilt ist, umfassend:
eine Steuereinheit (15, 16, 17), die ein vorbestimmtes Sendeband einer Relais-Station (RS) zuweist; die Steuereinheit (15, 16, 17) ausgelegt ist, das vorbestimmte Sendeband in Reaktion auf das Empfangen einer spezifischen Signalsequenz zuzuweisen, die nicht in der vorbestimmten Signalsequenzgruppe enthalten ist, aus der Relais-Station (RS) ohne Zuweisen des Aufwärtsstreckenkanals zum Mitteilen des angeforderten Bands an die Relais-Station.

4. Funkbasisstation (BS) gemäß Anspruch 3, wobei die Steuereinheit (15, 16, 17) ein unabhängiges Band jeder Relais-Station (RS), aus der die spezifische Signalsequenz gesendet wird, zuweist, wenn das Sendeband der Relais-Station zugewiesen ist.

5. Funkbasisstation (BS) gemäß Anspruch 3, wobei die Steuereinheit (15, 16, 17) ein durch eine Mehrzahl von Relais-Stationen (RS) geteiltes Band zuweist, wenn die Steuereinheit das Sendeband der Relais-Station zuweist.

6. Funkbasisstation (BS) gemäß Anspruch 3, wobei die Steuereinheit 1(15, 16, 17) ein Sendeband entsprechend der spezifischen Signalsequenz der Relais-Station (RS) zuweist, wenn die spezifische Signalsequenz empfangen wird.

7. Bandzuweisungsverfahren in einer Relais-Station (RS) zum Senden einer Nachricht an eine Funkbasisstation (BS), wobei die Funkbasisstation (BS) einen Aufwärtsstreckenkanal zum Mitteilen eines Anforderungsbands zuweist, wenn irgendeine Signalsequenz aus einer vorbestimmten Signalsequenzgruppe aus einem Endgerät (MS) empfangen wird und die Funkbasisstation (BS) dem Endgerät ein Sendeband anhand des Anforderungsbands zuweist, das aus dem Endgerät über den Aufwärtsstreckenkanal mitgeteilt ist, wobei das Bandzuweisungsverfahren umfasst:
Senden, durch die Relais-Station (RS), einer nicht in der vorbestimmten Signalgruppe enthaltenen spezifischen Signalsequenz; und
Empfangen von Zuweisung eines vorbestimmten Sendebandes aus der Funkbasisstation (BS), ohne der Relais-Station zugewiesen zu sein, der Aufwärtsstreckenkanal zum Mitteilen des Anforderungsbands.

## Revendications

1. Station relais (RS) pour relayer une communication entre un terminal (MS) et une station de base radio (BS), la station de base radio (BS) alloue au terminal (MS) un canal en liaison montante pour notifier une bande demandée lorsqu'une séquence de signal quelconque parmi un groupe de séquences de signal prédéterminées est reçue depuis le terminal, alloue une bande de transmission selon la bande demandée notifiée depuis le terminal par l'intermédiaire du canal, et alloue une bande de transmission prédéterminée à la station relais, la station relais (RS) comportant :
une unité de transmission (34) pour envoyer une séquence de signal à la station de base radio (BS) ;
l'unité de transmission (34) est agencée pour envoyer une séquence de signal spécifique, non incluse dans le groupe de séquences de signal prédéterminées, pour obtenir une bande de transmission prédéterminée depuis la station de base radio (BS), le canal en liaison montante pour notifier la bande demandée par la station de base radio n'étant pas alloué à la station relais.

2. Station relais (RS) selon la revendication 1, dans laquelle la station relais est agencée pour recevoir la séquence de signal spécifique spécifiée par la station de base radio (BS).

3. Station de base radio (BS) pour allouer à un terminal (MS) un canal en liaison montante pour notifier une bande demandée lorsqu'une séquence de signal quelconque parmi un groupe de séquences de signal prédéterminées est reçue depuis le terminal, et allouer une bande de transmission selon la bande demandée notifiée depuis le terminal par l'intermédiaire du canal, comportant :
une unité de contrôle (15, 16, 17) qui alloue une bande de transmission prédéterminée à une station relais (RS) ;
l'unité de contrôle (15, 16, 17) est agencée pour allouer la bande de transmission prédéterminée en réponse à la réception d'une séquence de signal spécifique, non incluse dans le groupe de séquences de signal prédéterminées, depuis la station relais (RS) sans allouer à la station relais le canal en liaison montante pour notifier la bande demandée.

4. Station de base radio (BS) selon la revendication 3, dans laquelle l'unité de contrôle (15, 16, 17) alloue une bande indépendante à chacune des stations relais (RS) depuis laquelle est envoyée la séquence de signal spécifique, lorsque la bande de transmission est allouée à la station relais.

5. Station de base radio (BS) selon la revendication 3, dans laquelle l'unité de contrôle (15, 16, 17) alloue une bande partagée par une pluralité de stations relais (RS), lorsque l'unité de contrôle alloue la bande de transmission à la station relais.

6. Station de base radio (BS) selon la revendication 3, dans laquelle l'unité de contrôle (15, 16, 17) alloue une bande de transmission correspondant à la séquence de signal spécifique à la station relais (RS), lorsque la séquence de signal spécifique est reçue.

7. Procédé d'allocation de bande dans une station relais (RS) pour transmettre un message à une station de base radio (BS), la station de base radio (BS) alloue un canal en liaison montante pour notifier une bande demandée lorsqu'une séquence de signal quelconque parmi un groupe de séquences de signal prédéterminées est reçue depuis un terminal (MS), et la station de base radio (BS) alloue au terminal une bande de transmission selon la bande de requête notifiée depuis le terminal par l'intermédiaire du canal en liaison montante, le procédé d'allocation de bande comportant :
la transmission par la station relais (RS) d'une séquence de signal spécifique non incluse dans le groupe de signaux prédéterminés ; et
la réception d'une allocation d'une bande de transmission prédéterminée depuis la station de base radio (BS), sans allouer à la station relais le canal en liaison montante pour notifier la bande demandée.
